# EUROPÄISCHE PATENTSCHRIFT

(11) **EP 2 062 834 B1**
(45) Veröffentlichungstag und Bekanntmachung des Hinweises auf die Patenterteilung: **27.07.2011**
(21) Anmeldenummer: 08170019.7
(22) Anmeldetag: 26.11.2008
(51) Int. Cl.: B65D 90/52, B65D 88/36, B60K 15/077, B60P 3/22

(54) **Vorrichtung zum Stabilisieren von Flüssigkeiten in einem Behälter**
Device for stabilising fluids in a container
Dispositif de stabilisation de liquides dans un récipient

(30) Priorität: 26.11.2007 DE 102007057180
(43) Veröffentlichungstag der Anmeldung: 27.05.2009
(73) Patentinhaber: KAEFER Isoliertechnik GmbH & Co. KG, 28195 Bremen (DE)
(72) Erfinder: Matthies, René, 28816 Stuhr (DE); Boguhn, Alexander, 21029 Hamburg (DE); Holtz, Sebastian, 18119 Rostock (DE); Glißmann, Bernd, 29664 Walsrode (DE)
(74) Vertreter: von Ahsen, Erwin-Detlef

(56) Entgegenhaltungen:
- DE-B- 1 297 539
- US-A1- 2009 001 085

## Beschreibung

Die Erfindung betrifft eine Vorrichtung zum Stabilisieren von Flüssigkeiten in einem Behälter, wobei auf der Oberfläche der Flüssigkeit ein aus mehreren ersten Schwimmelementen aufgebauter Schwimmkörper schwimmt, und das Ausmaß des Schwimmkörpers überwiegend der Oberfläche der Flüssigkeit entspricht.

Eine derartige Vorrichtung und/oder Tank zum Transport flüssiger Ladungen ist aus der DE 1 297 539 bekannt.

Beim Transport flüssiger Ladung können durch das Schwappen der Ladung, in der Fachsprache Sloshing genannt, erhebliche Kräfte auf die Behälter wirken. Diese Kräfte können den Behälter beschädigen und/oder das Transportmittel, beispielsweise ein Schiff oder einen Lastkraftwagen, instabil werden lassen. Es ist bekannt, dass das Schwappen der flüssigen Ladung vor allem dann auftritt, wenn der Behälter nur teilweise gefüllt ist.

Während des Transportes können sich aufgrund der Transportbewegungen verhältnismäßig große Wellen innerhalb des Behälters bilden. Diese brechen sich an den Behälterwandungen oder werden von diesen zurückgeworfen. Derartige Wellenbewegungen entstehen beispielsweise bei Bremsmanövern von Lastkraftwagen oder durch die Roll- und Stampfbewegungen seegehender Schiffe.

Um das Schwappen der flüssigen Ladung zu reduzieren, ist es bekannt, so genannte Schlagschotts zu verwenden, die ganz oder teilweise in die Flüssigkeit eintauchen. Hierbei ist nachteilig, dass die Schlagschotts eine sehr stabile und feste Verbindung mit dem Behälter benötigen, um die auftretenden dynamischen Kräfte sicher und gleichmäßig auf den Behälter zu übertragen. Ferner ist bekannt, den Behälter mit starren Füllkörpern zu füllen, die ebenfalls fest mit dem Behälter verbunden sind und die eine durchlässige Struktur aufweisen.

Nachteilig ist hierbei, dass die bekannten Schlagschotts oder andere starre Strukturen, die fest mit dem Behälter verbunden sind, für den Einsatz bei stark gekühlten Flüssigkeiten ungeeignet sind. So wird beispielsweise flüssiges Erdgas bei einer Temperatur von etwa -162°C transportiert. Die hierfür verwendeten Membrantanks weisen eine verhältnismäßig empfindliche Innenisolierung auf und die ebenen Seitenwände sind durch das Schwappen der Flüssigkeit und die hierdurch auf die Seitenwände wirkenden Kräfte besonders gefährdet. Aufgrund der niedrigen Temperaturen können die bisher bekannten Vorrichtungen zur Reduzierung des Schwappens der Ladung nicht verwendet werden, da die Gefahr der Versprödung des verwendeten Materials besteht. So werden für Schlagschotts üblicherweise Stähle verwendet, die jedoch bei sehr niedrigen Temperaturen verspröden, wodurch die Gefahr besteht, dass das Material bricht. Die in der zu transportierenden Flüssigkeit treibenden Bruchstücke können den Behälter erheblich beschädigen.

Des Weiteren ist von Nachteil, dass für Teilladungszustände die Wände bisher bekannter Behälter für einen Spitzendruck von zum Beispiel 36 bar ausgelegt sein müssten, um den durch die Wellen auf die Wände einwirkenden Kräften entgegen wirken zu können. Dies erfordert einen hohen konstruktiven Aufwand, der zu hohen Kosten in der Entwicklung und der Herstellung führt.

Ferner ist von Nachteil, dass die feste Verbindung von beispielsweise Schlagschotts mit dem Behälter eine erhebliche Wärmebrücke darstellt. Hierdurch wird der Kühlaufwand erhöht, wodurch sich ein erhöhter Energie- und Kostenaufwand ergibt.

Dies führt zu dem Nachteil, dass beim Transport von sehr stark gekühlten Flüssigkeiten, wie beispielsweise flüssigem Erdgas, die verwendeten Tanks beispielsweise auf Schiffen nicht teilgefüllt werden. Hierdurch entstehen erhebliche wirtschaftliche Nachteile, da nur große Ladungsmengen an einem Ort übernommen oder abgegeben werden können und eine bedarfsgerechte Verteilung der Ladung in kleineren Einheiten nicht erfolgen kann.

Es ist daher das der Erfindung zugrunde liegende Problem, eine Vorrichtung und einen Tank der vorgenannten Art derart weiterzuentwickeln, dass das Schwappen einer Flüssigkeit auf kostengünstige Weise deutlich reduziert werden kann und dass die verwendeten Behälter in einem teilgefüllten Zustand betrieben werden können.

Das Problem wird dadurch gelöst, dass bei einer Vorrichtung der vorgenannten Art an dem Schwimmkörper mindestens ein Dämpfungselement angeordnet ist, welches vertikal in die Flüssigkeit eintaucht. Ferner wird das Problem durch einen Tank mit einer solchen Vorrichtung gelöst.

Hierdurch kann das Schwappen der flüssigen Ladung auf einfache Weise vermindert werden. Da der Schwimmkörper auf der Oberfläche der Flüssigkeit schwimmt, erfolgt die schwallbremsende Wirkung der Vorrichtung unabhängig von dem Füllstand des Behälters. Somit können nun auch teilgefüllte Behälter gefahrlos transportiert werden. Aufgrund des Dämpfungselementes ergibt sich eine ähnliche Wirkung wie bei bisher bekannten Schlagschotts. Die Bewegung der Flüssigkeit wird gebremst, wobei das Dämpfungselement flexibel sein kann. Hierdurch wird die Gefahr eines Materialbruchs aufgrund besonders hoher einwirkender Kräfte erheblich reduziert. Das Dämpfungselement selbst kann mit kleinen Durchtrittsöffnungen versehen sein. Die Gefahr einer Instabilität des Transportmittels durch ein Schwappen der Flüssigkeit wird zuverlässig vermindert. Ferner werden aufgrund der fehlenden starren Verbindung der Vorrichtung mit dem Behälter keine zusätzlichen Wärmebrücken ausgebildet. Hierdurch kann der Energie- und Kostenaufwand zum Kühlen der Flüssigkeit reduziert werden. Da die Oberfläche der Flüssigkeit überwiegend mit dem Schwimmkörper bedeckt ist, wird der Anteil der freien Flüssigkeitsoberfläche reduziert und hierdurch die Ausbildung von Wellen- und Schwappbewegungen reduziert. Hierdurch ist es ferner möglich den Auslegungsdruck der Behälter erheblich zu reduzieren. So müssen die Behälter und/oder deren Wände nur für einen reduzierten Spitzendruck von beispielsweise 5 bis 6 bar ausgelegt werden, anstelle des bisher beispielsweise zu berücksichtigenden Spitzendruckes von 36 bar. Dies ermöglicht eine erheblich Kostenreduzierung bei der Entwicklung und Herstellung. Zudem sinkt aufgrund des geringeren Materialbedarfs das Eigengewicht der Behälter, wodurch die Zuladung der Transportmittel ggf. gesteigert werden kann.

Nach einer vorteilhaften Weiterbildung ist der Schwimmkörper mindestens teilweise flexibel. Aufgrund dieser teilweisen Flexibilität des Schwimmkörpers kann der Schwimmkörper eine leichte Wellenbewegung zulassen. Hierdurch können auch erhebliche Kräfte von dem Schwimmkörper aufgenommen werden, ohne dass die Gefahr besteht, dass der Schwimmkörper bricht. Zudem kann vermieden werden, dass sich die Flüssigkeit an dem Schwimmkörper bricht, wodurch erhebliche Turbulenzen entstehen können, welche zu erneuten Schwappbewegungen führen können.

Entsprechend einer Weiterbildung sind die ersten Schwimmelemente schlauchartig ausgebildet. Hierdurch lassen sich die ersten Schwimmelemente auf einfache Weise durch kleinere Öffnungen des Behälters in den Innenraum des Behälters einführen. Somit können auch ältere Behälter auf einfache und kostengünstige Weise nachgerüstet werden. Zudem sind schlauchartige Schwimmelemente einfach herzustellen und lassen sich vorzugsweise mit einem geeigneten Fluid, zum Beispiel Stickstoff, füllen. Dies begünstigt eine kostengünstige Herstellung und einen einfachen Betrieb.

Vorzugsweise entsprechen die Ausmaße des Schwimmkörpers den Innenmaßen des, insbesondere in einem mittleren Bereich, horizontal (Ebene parallele zur Ebene des Flüssigkeitsspiegels) geschnittenen Behälters. Hierdurch wird abhängig von der Form des Behälters in der Regel die größtmögliche Oberfläche der Flüssigkeit mit dem Schwimmkörper bedeckt. Steigt der Flüssigkeitsspiegel über den mittleren Bereich in einen oberen Bereich hinaus an und ist der horizontal geschnittene Querschnitt des oberen Bereiches kleiner als der des mittleren Bereiches, verbleibt der Schwimmkörper in dem mittleren Bereich und wird an den Stellen mit der Flüssigkeit in vertikaler Richtung durchströmt, an denen die Flüssigkeitsoberfläche zuvor nicht bedeckt war. Somit befindet sich der Schwimmkörper bei einem vollständig gefüllten Behälter und abhängig von der Form des Behälters entweder auf der Oberfläche der Flüssigkeit oder ist in der Flüssigkeit eingetaucht. In beiden Fällen führt der Schwimmkörper zu einer Verminderung der Schwappbewegungen der Flüssigkeit.

Nach einer Ausführungsform sind die ersten Schwimmelemente flexibel. Hierdurch können die ersten Schwimmelemente den einwirkenden Kräften nachgeben und die Gefahr des Brechens der ersten Schwimmelemente kann vermieden werden.

Vorzugsweise sind die ersten Schwimmelemente mittels Verbindungselementen miteinander verbunden. Die Verbindungselemente können T-förmig, Kreuz-förmig und/oder L-förmig ausgebildet sein. Mittels der Verbindungselemente lassen sich die ersten Schwimmelemente in der Art eines Baukastensystems zu einem Schwimmkörper zusammenfügen. Aufgrund eines solchen modulartig zusammengesetzten Schwimmkörpers wird die Montage des Schwimmkörpers in dem Behälter erleichtert. Ferner können hierdurch auf einfache und kostengünstige Weise unterschiedliche Formen und Größen des Schwimmkörpers realisiert werden. Vorteilhafterweise sind die Verbindungselemente starr ausgebildet. Somit setzt sich der Schwimmkörper sowohl aus flexiblen als auch starren Elementen zusammen. Dies begünstigt die Reduzierung der Wellen- und Schwappbewegung.

Nach einer Weiterbildung sind der Schwimmkörper und/oder die Verbindungselemente aus einem Kunststoff, insbesondere PET hergestellt. Die Verarbeitung derartiger Materialien ist an sich bekannt. Die Herstellung entsprechender Schwimmkörper und/oder Verbindungselementen lässt sich somit kostengünstig realisieren. Ferner erlauben die Eigenschaften derartiger Materialien einen dauerhaften Einsatz im direkten Kontakt mit einer stark gekühlten Flüssigkeit, wie beispielsweise flüssigem Erdgas.

Entsprechend einer weiteren Ausführungsform weist der Schwimmkörper dreieckige und/oder mehreckige Gefache auf. Die Gefache werden durch eine entsprechend geeignete Anordnung der schlauchartigen ersten Schwimmelemente im Verbund mit den Verbindungselementen ausgebildet. Über die Ausbildung der Gefache kann der Anteil der ersten Schwimmelemente erhöht werden und somit die Dämpfungseigenschaft des Schwimmkörpers gesteigert werden. Hierbei sind die Eckpunkte der Gefache aufgrund der starren Verbindungselemente nicht gelenkig, während die zwischen den Eckpunkten angeordneten ersten Schwimmelemente flexibel sind. Durch diese Kombination ergibt sich sowohl eine gute Dämpfungseigenschaft als auch eine hohe Standfähigkeit des Schwimmkörpers.

Vorzugsweise ist das Dämpfungselement als eine Membran ausgebildet und ist vorzugsweise am unteren Ende beschwert. Insbesondere ist das Dämpfungselement an, insbesondere zwei, Verbindungselementen befestigt. Eine Befestigung des Dämpfungselementes lässt sich besonders einfach realisieren, wenn die Verbindungselemente starr sind. Zudem wird hierdurch die Flexibilität des zwischen den Verbindungselementen angeordneten ersten Schwimmelementes reduziert, wodurch die Dämpfungseigenschaften des Schwimmkörpers erhöht werden.

Nach einer Ausführung der Erfindung ist der Schwimmkörper aus einer oder mehreren Lagen von, insbesondere linsenförmigen und/oder durch ein umgebendes Netz miteinander verbundenen, Treibelementen aufgebaut, und vorzugsweise sind die Treibelemente als zweite Schwimmelemente vorgesehen. Die Treibelemente können direkt oder indirekt miteinander verbunden sind, wobei eine indirekte bzw. mittelbare Verbindung der Treibelemente beispielsweise mittels eines aufgelegten oder umgebenden Netzes realisierbar ist. Durch das Vorsehen eines Netzes können sich die Treibelemente beispielsweise aufgrund der Flüssigkeitsbewegungen gegeneinander verschieben, wobei jedoch ein Übereinanderschieben der Treibelemente zuverlässig vermieden wird. Hierdurch ist eine dauerhafte Funktionsfähigkeit des Schwimmkörpers gewährleistet. Die Treibelemente erhöhen die Oberflächenspannung der Flüssigkeit, insbesondere begrenzt innerhalb eines Gefaches, und reduzieren somit die Wellen- und Schwappbewegungen. Die Treibelemente können aber auch im Verbund mit den ersten Schwimmelementen als zweite Schwimmelemente vorgesehen sein. Hierdurch können die Vorteile beider Schwimmelemente miteinander verbunden werden. Vorzugsweise sind die Treibelemente als zweite Schwimmelemente innerhalb der Gefache angeordnet. Hierdurch wird die Ausbildung von Oberflächenwellen in den Gefachen gedämpft.

Entsprechend einer Weiterbildung der Erfindung ist der Schwimmkörper aus einem, insbesondere folien- oder netzartigen Stabilisierungsmittel aufgebaut, und vorzugsweise ist das Stabilisierungsmittel als ein drittes Schwimmelement an den schlauchartigen ersten Schwimmelementen und/oder den Verbindungselementen befestigt. Somit kann allein das Stabilisierungsmittel den Schwimmkörper bilden und schwallbremsend auf die Flüssigkeit wirken. Ferner kann das Stabilisierungsmittel im Verbund mit den schlauartigen ersten Schwimmelementen als ein drittes Schwimmelement verwendet werden. Hierdurch können beispielsweise die freien Oberflächen der Gefache reduziert werden. Im Verbund mit den Treibelementen als zweite Schwimmelemente ist das dritte Schwimmelement zum Lagesichern der Treibelemente in der Horizontalen einsetzbar. Das Stabilisierungsmittel kann mit kleinen Durchtrittsöffnungen versehen sein. Hierdurch ist gewährleistet, dass die Flüssigkeit durch den Schwimmkörper hindurch treten kann. Dies erleichtert das Beund Entladen des Behälters und ermöglicht ferner eine vollständige Beladung des Behälters auch dann, wenn der Schwimmkörper der Oberfläche der Flüssigkeit nicht in alle Bereiche des Behälters folgen kann.

Vorzugsweise ist der Behälter als ein Membrantank, insbesondere für flüssiges Erdgas, ausgebildet. Derartige Membrantanks für flüssiges Erdgas sind an sich bekannt und konnten bisher aufgrund ihrer empfindlichen Innenisolierung nur in einem voll beladenen Zustand sicher transportiert werden. Die ebenen Seitenwände sind durch die bei Schwappbewegungen auftretenden Kräfte besonders gefährdet gewesen. Aufgrund der erheblichen Minderung der Schwappbewegungen mittels der erfindungsgemäßen Vorrichtung können Membrantanks nun auch teilgefüllt sicher transportiert werden. Ferner können auch alte Membrantanks leicht nachgerüstet werden. Somit ist ein Tank, insbesondere Membrantank, zum Lagern und/oder Transportieren von Flüssigkeiten, insbesondere flüssigem Erdgas, mit einer erfindungsgemäßen Vorrichtung von Vorteil.

Von besonderem Vorteil ist die Verwendung einer erfindungsgemäßen Vorrichtung zum Stabilisieren von Flüssigkeiten, insbesondere flüssigem Erdgas, und/oder eines Tank zum Lagern und/oder Transportieren von Flüssigkeiten, insbesondere flüssigem Erdgas.

Nachfolgend wird die Erfindung anhand eines Ausführungsbeispiels mittels der folgenden Zeichnung näher erläutert. Es zeigt:

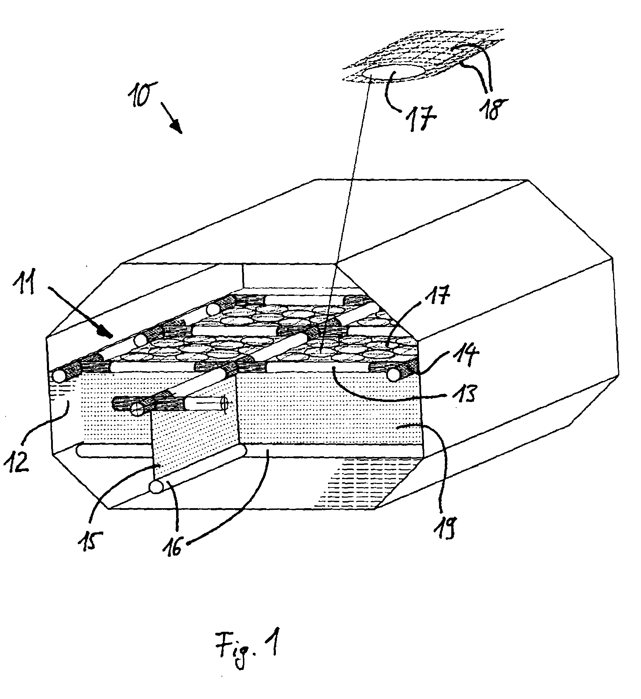

- Fig. 1: eine geschnittene perspektivische Seitenansicht einer Vorrichtung mit den Erfindungsmerkmalen.

Fig. 1 zeigt einen Tank 1, der hier als ein Membrantank 10 ausgebildet ist. Innerhalb des Membrantanks 10 ist ein Schwimmkörper 11 angeordnet. Der Schwimmkörper 11 schwimmt auf der Oberfläche einer Flüssigkeit 12 und die Ausmaße des Schwimmkörpers 11 entsprechen der Ausdehnung der Oberfläche der Flüssigkeit 12. Die Flüssigkeit 12 ist hier flüssiges Erdgas 12. Der Schwimmkörper 11 ist modulartig aus ersten Schwimmelementen 13 und Verbindungselementen 14 zusammengesetzt.

Die ersten schlauchartigen Schwimmelemente 13 sind mittels T-förmiger, Kreuzförmiger und L-förmiger Verbindungselemente 14 derart zusammengesetzt, dass sich zwei nebeneinander liegende Reihen quadratischer Gefache ergeben. An benachbarten Verbindungselementen 14 ist ein erstes Dämpfungselement 15 und ein hierzu im 90° Winkel angeordnetes zweites Dämpfungselement 19 befestigt. Die Dämpfungselemente 15, 19 sind am unteren Ende mittels eines Gewichtes 16 beschwert und tauchen senkrecht in die Flüssigkeit 12 ein.

Innerhalb der viereckigen Gefache sind jeweils mehrere linsenförmige Treibelemente 17 angeordnet. Die Treibelemente 17 schwimmen nebeneinander liegend auf der Oberfläche der Flüssigkeit 12 und sind von einem Netz 18 umgeben.

Nachfolgend wird die Funktionsweise der erfindungsgemäßen Vorrichtung anhand der Fig.1 näher erläutert:

Soll ein Membrantank 10 mit einem Schwimmkörper 11 ausgestattet werden, werden die benötigten Elemente einzeln über eine geeignete Öffnung in den Membrantank 10 eingebracht. Innerhalb des Membrantankes 10 werden die Elemente sodann modulartig zusammengesetzt, so dass die Ausmaße des Schwimmkörpers 11 im Wesentlichen den Innenmaßen des horizontal geschnittenen Tanks 10 entsprechen. Hierbei bedeutet im Wesentlichen, dass die Oberfläche der Flüssigkeit von einer ersten Seitenwand des Tanks 10 bis zu einer der ersten Seitenwand gegenüberliegenden zweiten Seitenwand des Tanks 10 mit dem Schwimmkörper 11 bedeckt ist. Ferner wird der Schwimmkörper 11 entsprechend der größtmöglichen Oberfläche ausgelegt. Dies entspricht hier einem Schnitt des Tankes 10 auf etwa halber Höhe.

Die ersten Schwimmelemente 13 werden mittels der Verbindungselemente 14 derart zusammengesetzt, dass sich zwischen zwei gegenüberliegenden Seitenwänden mindestens zwei viereckige Gefache ausbilden. An Verbindungselementen 14 des Schwimmkörpers werden Dämpfungselemente 15, 19 befestigt und mit Gewichten 16 beschwert. Zusätzlich werden die Freiflächen der Gefache mit Treibelementen 17 ausgelegt, die von einem Netz 18 umgeben sind.

Wird nun der Tank 10 mit flüssigem Erdgas 12 bis etwa zur Hälfte des möglichen Volumens befüllt, schwimmt der Schwimmkörper 11 auf der Oberfläche der Flüssigkeit 12. Bei Brems- oder Beschleunigungsbewegungen sowie Schwankbewegungen des Tankes 10 werden die hierdurch verursachten Schwappbewegungen der Flüssigkeit 12 mittels des Schwimmkörpers 11 reduziert und gedämpft. Durch die ersten Schwimmelemente 13, die Verbindungselemente 14, die Treibelemente 17 und das Netz 18 wird eine Wellenentstehung erschwert.

### Bezugszeichenliste:

- 10: Tank
- 11: Schwimmkörper
- 12: Flüssigkeit
- 13: Erstes Schwimmelement
- 14: Verbindungselement
- 15: Dämpfungselement
- 16: Gewicht
- 17: Treibelemente
- 18: Netz
- 19: Dämpfungselement

## Patentansprüche

1. Vorrichtung zum Stabilisieren von Flüssigkeiten (12) in einem Behälter (10), wobei auf der Oberfläche der Flüssigkeit (12) ein aus mehreren ersten Schwimmelementen (13) aufgebauter Schwimmkörper (11) schwimmt, und das Ausmaß des Schwimmkörpers (11) überwiegend der Oberfläche der Flüssigkeit (12) entspricht, **dadurch gekennzeichnet, dass** an dem Schwimmkörper (11) mindestens ein Dämpfungselement (15, 19) angeordnet ist, welches vertikal in die Flüssigkeit (12) eintaucht.

2. Vorrichtung nach Anspruch 1, **dadurch gekennzeichnet, dass** der Schwimmkörper (11) mindestens teilweise flexibel ist.

3. Vorrichtung nach einem der Ansprüche 1 oder 2, **dadurch gekennzeichnet, dass** die ersten Schwimmelementen (13) schlauchartig sind.

4. Vorrichtung nach einem der vorhergehenden Ansprüche, **dadurch gekennzeichnet, dass** die Ausmaße des Schwimmkörpers (11) den Innenmassen des, insbesondere in einem mittleren Bereich, horizontal geschnittenen Behälters (10) entsprechen.

5. Vorrichtung nach einem der vorhergehenden Ansprüche, **dadurch gekennzeichnet, dass** die ersten Schwimmelemente (13) flexibel sind.

6. Vorrichtung nach einem der vorhergehenden Ansprüche, **dadurch gekennzeichnet, dass** die ersten Schwimmelemente (13) mittels Verbindungselementen (14) miteinander verbunden sind, wobei vorzugsweise die Verbindungselemente (14) starr sind.

7. Vorrichtung nach einem der vorhergehenden Ansprüche, **dadurch gekennzeichnet, dass** der Schwimmkörper (11) und/oder die Verbindungselemente (14) aus einem Kunstoff, insbesondere PET, hergestellt sind.

8. Vorrichtung nach einem der vorhergehenden Ansprüche, **dadurch gekennzeichnet, dass** der Schwimmkörper (11) dreieckige und/oder mehreckige Gefache aufweist.

9. Vorrichtung nach einem der vorhergehenden Ansprüche, **dadurch gekennzeichnet, dass** das Dämpfungselement (15, 19) als eine Membran ausgebildet ist und insbesondere am unteren Ende beschwert ist, wobei vorzugsweise das Dämpfungselement (15, 19) an, insbesondere zwei, Verbindungselementen (14) befestigt ist.

10. Vorrichtung nach einem der vorhergehenden Ansprüche, **dadurch gekennzeichnet, dass** der Schwimmkörper (11) eine oder mehrere Lagen von, insbesondere linsenförmigen und/oder durch ein umgebendes Netz (18) miteinander verbundenen, Treibelementen (17) aufweist, und dass vorzugsweise die Treibelemente (17) als zweite Schwimmelemente vorgesehen sind.

11. Vorrichtung nach Anspruch 10, **dadurch gekennzeichnet, dass** die Treibelemente (17) als zweite Schwimmelemente innerhalb der Gefache angeordnet sind.

12. Vorrichtung nach einem der vorhergehenden Ansprüche, **dadurch gekennzeichnet, dass** der Schwimmkörper (11), insbesondere folienoder netzartiges, Stabilisierungsmittel (18) aufweist, und dass vorzugsweise das Stabilisierungsmittel (18) als ein drittes Schwimmelement an den schlauchartigen ersten Schwimmelementen (13) und/oder den Verbindungselementen (14) befestigt ist.

13. Vorrichtung nach einem der vorhergehenden Ansprüche, **dadurch gekennzeichnet, dass** der Behälter (10) als ein Membrantank, insbesondere für flüssiges Erdgas, ausgebildet ist.

14. Tank, insbesondere Membrantank, zum Lagern und/oder Transportieren von Flüssigkeiten (12), insbesondere flüssigem Erdgas, mit einer Vorrichtung nach einem der vorhergehenden Ansprüche.

15. Verwendung einer Vorrichtung zum Stabilisieren von Flüssigkeiten (12), insbesondere flüssigem Erdgas, und/oder eines Tanks zum Lagern und/oder Transportieren von Flüssigkeiten (12), insbesondere flüssigem Erdgas, nach einem der vorhergehenden Ansprüche.

## Claims

1. A device for stabilising liquids (12) in a container (10), wherein a flotation body (11) assembled from a plurality of first flotation elements (13) floats on the surface of the liquid (12), and the dimension of the flotation body (11) predominantly corresponds to the surface of the liquid (12), wherein at least one damping element (15, 19) that dips vertically into the liquid (12) is attached to the flotation body (11).

2. The device according to claim 1, wherein the flotation body (11) is at least partially flexible.

3. The device according to one of claims 1 or 2, wherein the first flotation elements (13) are tubular.

4. The device according to one of the previous claims, wherein the dimensions of the flotation body (11) correspond to the internal dimensions, particularly in a central area, of the horizontally cut container (10).

5. The device according to one of the previous claims, wherein the first flotation elements (13) are flexible.

6. The device according to one of the previous claims, wherein the first flotation elements (13) are connected to one another by means of connecting elements (14), wherein said connecting elements are preferably (14) rigid.

7. The device according to one of the previous claims, wherein the flotation body (11) and/or the connecting elements (14) are manufactured out of a plastic, especially PET.

8. The device according to one of the previous claims, wherein the flotation body (11) has triangular and/or polygonal partitions.

9. The device according to one of the previous claims, wherein the damping element (15, 19) is designed as a membrane and is weighted particularly at the bottom, wherein said damping element (15, 19) is preferably fastened to, in particular two, connecting elements (14).

10. The device according to one of the previous claims, wherein the flotation body (11) has one or a plurality of layers of, in particular lenticular drift elements (17), and/or drift elements (17) that are connected together by means of a surrounding net (18), and the drift elements (17) are preferably intended as a second flotation element.

11. The device according to claim 10, wherein the drift elements (17) are arranged as a second flotation element inside the partitions.

12. The device according to one of the previous claims, wherein the flotation body (11) has a, in particular sheet-like or net-like, stabilising agent (18), and the stabilising agent (18) is fastened as a third flotation element on the tubular first flotation elements (13) and/or on the connecting elements (14).

13. The device according to one of the previous claims, wherein the container (10) is designed as a membrane tank, in particular for liquefied petroleum gas.

14. A tank, especially a membrane tank, for the storage and/or transportation of liquids (12), especially liquefied petroleum gas, with a device according to one of the previous claims.

15. Use of a device for stabilising liquids (12), especially liquefied petroleum gas, and/or of a tank for the storage and/or transportation of liquids (12), especially liquefied petroleum gas, according to one of the previous claims.

## Revendications

1. Dispositif de stabilisation de liquides (12) dans un récipient (10), un flotteur (11) construit de plusieurs premiers éléments flottants (13), flottant à la surface du liquide (12) et les dimensions du flotteur (11) correspondant substantiellement à la surface du liquide (12), **caractérisé en ce que** au flotteur (11) est disposé au moins un élément amortisseur (15, 19), qui plonge verticalement dans le liquide (12).

2. Dispositif selon la revendication 1, dans lequel le flotteur (11) est au moins partiellement souple.

3. Dispositif selon l'une des revendications 1 ou 2, dans lequel les premiers éléments flottants (13) sont tubulaires.

4. Dispositif selon l'une des revendications précédentes, **caractérisé en ce que** les dimensions du flotteur (11) correspondent aux dimensions intérieures du récipient (10), en particulier du récipient coupé horizontalement dans une zone médiane.

5. Dispositif selon l'une des revendications précédentes, **caractérisé en ce que** les premiers éléments flottants (13) sont souples.

6. Dispositif selon l'une des revendications précédentes, **caractérisé en ce que** les premiers éléments flottants (13) sont reliés les uns aux autres au moyen de fixations (14), de préférence les éléments de fixation (14) étant rigides.

7. Dispositif selon l'une des revendications précédentes, **caractérisé en ce que** le flotteur (11) et / ou les éléments de liaison (14) sont faites en une matière plastique, notamment en PET.

8. Dispositif selon l'une des revendications précédentes, **caractérisé en ce que** le flotteur (11) présente des compartiments triangulaires et / ou polygonaux.

9. Dispositif selon l'une des revendications précédentes, **caractérisé en ce que** l'élément amortisseur (15, 19) est formé d'une membrane, et en particulier est alourdie à l'extrémité inférieure, de préférence l'élément d'amortissement (15, 19) est fixé à des, en particulier deux, éléments de fixation (14).

10. Dispositif selon l'une des revendications précédentes, **caractérisé en ce que** le flotteur (11) présente une ou plusieurs couches d'éléments d'entraînement (17), en particulier lenticulaires et / ou reliés les uns aux autres par un filet environnant (18), et que, de préférence les éléments d'entraînement (17) sont prévus à titre de deuxièmes éléments flottants.

11. Dispositif selon la revendication 10, **caractérisé en ce que** les éléments d'entraînement (17) sont disposés en tant que deuxièmes éléments flottants à l'intérieur des compartiments.

12. Dispositif selon l'une des revendications précédentes, **caractérisé en ce que** le flotteur (11) comporte un agent stabilisant (18) en particulier en forme de feuille ou de filet, et que, de préférence l'agent stabilisant (18) est fixé en tant que troisième élément flottant aux premiers éléments flottants (13) tubulaires et / ou aux éléments de liaison (14).

13. Dispositif selon l'une des revendications précédentes, **caractérisé en ce que** le récipient (10) est formé comme un réservoir à membrane, en particulier pour le gaz naturel liquide.

14. Réservoir, en particulier réservoir à membrane, pour le stockage et / ou le transport de liquides (12), en particulier le gaz naturel liquide, par un dispositif selon l'une des revendications précédentes.

15. Utilisation d'un dispositif de stabilisation de liquides (12), notamment le gaz naturel liquide, et / ou d'un réservoir pour le stockage et / ou le transport de liquides (12), en particulier le gaz naturel liquéfié, selon l'une des revendications précédentes.
